# EUROPEAN PATENT APPLICATION

(11) **EP 3 805 979 A1**
(43) Date of publication of application: **14.04.2021**
(21) Application number: 19202643.3
(22) Date of filing: 11.10.2019
(51) Int. Cl.: G06K 9/00, G06F 3/01, H04N 5/225, H04N 5/232, H04N 5/235, H04N 5/33

(54) **USER CONTROLLED IMAGING DEVICE**

(71) Applicant: Lumileds Holding B.V., 1118 CL Schiphol (NL)
(72) Inventor: The designation of the inventor has not yet been filed
(74) Representative: ter Heegde, Paul Gerard Michel

(57) **Abstract**

The invention describes a user controlled imaging device (1). The user controlled imaging device (1) comprises an imaging unit (4). Further, the user controlled imaging device (1) includes a user facing imaging unit (3). Besides the user controlled imaging device (1) comprises a pupil detection- and tracking unit (2) for computing the user's viewing direction. The user controlled imaging device (1) also includes a control unit (2, 9) for controlling the imaging unit (4) corresponding to the determined direction of the user's view. The invention also describes a mobile end device (40). Moreover, the invention describes a method of steering an imaging unit (4).

## Description

### FIELD OF THE INVENTION

The invention describes a user controlled imaging device. The imaging device comprises an imaging unit. Further, the invention describes a mobile end device. Furthermore, the invention describes a method of steering an imaging unit.

### BACKGROUND OF THE INVENTION

Many mobile devices and many other devices in industrial, medical and automotive domains are equipped with multiple numbers of image sensors. For instance, mobile devices like smartphones or tablets are equipped with multiple front and rear camera modules. In addition to a conventional front camera sensor with RGB Bayer colour filter array, IR light source and IR sensitive sensors are also added to the front side of the mobile devices. This set of hardware units feed software applications to support biometric verification such as iris and face detection or recognition.

The rear side of such a mobile device may be equipped with one or more camera devices and lighting module in order to enrich photos taken with mobile devices. In the lowlight environment, lighting modules like camera flash is enabled to illuminate the scene. Some lighting modules can be designed in the form of statically or dynamically steerable light beams like disclosed in WO 2017 080 875 A1 referred to an adaptive light source and US 99 923 96 B1 concerning focusing a lighting module. However it is still inconvenient for the user to control the direction of the light beam of the light source, especially when hands-free control of the device is required.

Therefore, it is an object of the invention to provide a better image quality for mobile devices and a more convenient handling of the imaging process.

### SUMMARY OF THE INVENTION

The object of the invention is achieved by the user controlled imaging device of claim 1, by a mobile end device according to claim 9 and by the method of steering an imaging unit of claim 10.

The user controlled imaging device according to the invention comprises an imaging unit. The imaging unit is used for taking an image of a part of the environment with the user controlled imaging device. Further, the user controlled imaging device comprises a user facing imaging unit, which is used for depicting the face of the user. This user facing imaging unit may be for example on the opposite side of the user controlled imaging device such that a simultaneous surveillance of the face of the user and an imaging of a portion of the environment is enabled. However it is also possible that the user facing imaging unit is spatially separated from the imaging unit such that there is no interference between the monitoring of the user and the imaging of the environment of the user controlled imaging device. Moreover, the user controlled imaging device exhibits a pupil detection- and tracking unit for computing the direction of the user's viewing direction. The pupil detection- and tracking is performed based on the image data of the user facing imaging unit. The user controlled imaging device also includes a control unit for controlling the imaging unit corresponding to the determined direction of the user's view. Controlling the imaging unit particularly means that a directional function of the imaging unit is controlled based on the direction of the user's view. As later in detail explained the directional function may comprise the controlling of the direction of a focus or a light beam. The algorithm which is responsible for tracking the movement of the head/pupil takes several consecutive frames from the user-facing imaging unit into account in order to compute for example the direction of the light beam of the light source of the imaging unit. A statistical technique (e.g. running average), which elaborates the content of the consecutive frames in time and space, is incorporated into the algorithm to have a more robust and stable response of the steering of the directional function, for example of the light beam steering.

Hence a hands-free control of an imaging process of a scene to be imaged is realized, which enables a more target-oriented and automated reception of a selected portion to be imaged. Further an additional advantage is the subjective highlighting of a scene wherein the importance of objects is determined based on the user's attention, i.e. the viewing direction of his eyes. The invention is also advantageous for appliance of surveillance and remote observation, for example using drones.

An advantage of the invention is that controlling of the imaging unit is enabled without the use of the hand of the user. Further, the scene is able to be highlighted based on the user's attention to important objects. Hence the quality of important image areas is improved.

The mobile end device according to the invention comprises the user controlled imaging device according to the invention. The mobile end device may comprise for example a smartphone, a mobile phone, a tablet computer, a notebook or a subnotebook. The mobile end device shares the advantages of the user controlled imaging device.

According to the method of controlling an imaging unit, an image of the imaging unit is provided and the face of the user is monitored by an additional user facing imaging unit. Based on images from the user facing imaging unit a pupil detection is performed. Further a direction of user's view based on the pupil detection is determined and the imaging unit is controlled corresponding to the determined direction. Controlling the imaging unit may comprise orientating a light beam or positioning a focus of a camera for emphasizing a portion of a scene to be imaged.

The method of controlling an imaging unit shares the advantages of the user controlled imaging device.

The dependent claims and the following description disclose particularly advantageous embodiments and features of the invention. Features of the embodiments may be combined as appropriate. Features described in the context of one claim category can apply equally to another claim category.

Further, the imaging unit of the user controlled imaging device may include a light source with a steerable light beam. The light source has the function of illuminating a portion of the environment, which has to be depicted or which is intended to be highlighted in the imaged portion of the environment. In this variant, controlling of the imaging unit comprises orientating the light beam corresponding to the determined direction of the user's view.

Hence a hands-free control of a light beam for enlightenment of a scene to be imaged is realized, which enables a more target-oriented and automated enlightenment of a selected portion to be imaged. Further an additional advantage is the subjective highlighting of a scene wherein the importance of objects is determined based on the user's attention, i.e. the viewing direction of his eyes. For example snapshots in low lighting conditions as in mobile applications, medical exertions and industrial use, which require hands-free control of light beam steering, can benefit from the invention. Controlling the enlightenment of a scene is also advantageous for appliance of surveillance and remote observation, for example using drones.

An advantage of the mentioned variant is that the direction of the light beam is enabled to be controlled without the use of the hand of the user. Further, the scene is able to be highlighted based on the user's attention to important objects. Hence the quality of important image areas is improved.

According to an aspect of the user controlled imaging device the user facing imaging unit comprises a colour camera module. A colour camera module may be appropriate for depicting details of the eye and for creating image data, which are useful for pupil detection and localisation, which can be used for eye tracking.

Particularly, the user facing imaging unit may comprise an IR sensitive camera module. An IR sensitive camera is also fully functional in a dark environment. Further, the user facing imaging unit may additionally comprise an IR light source. IR light may be used for getting a better contrast for eye tracking and has the advantage of invisibility such that IR light does not disturb the user's view at the screen of his mobile device.

In an embodiment of the invention the user facing imaging unit comprises a front camera and the imaging unit comprises a rear camera. In this context, the front side is the side faced to the face of the user and the rear side is faced to the environment. Advantageously, the image sections of the different cameras do not overlap and do not interfere with each other.

Further, in an alternative variant of the invention controlling the imaging unit comprises positioning the focus of the rear camera corresponding to the determined direction of the user's view. In this variant a portion of the scene to be imaged is able to be automatically focused based on the direction of the user's view. Hence, important portions of the images are able to be emphasized not only by light but also by image sharpness.

Furthermore, in a particular variation of the user controlled imaging device the light source comprises a flash. The flash enables highlighting of a scene in a dark environment.

Other objects and features of the present invention will become apparent from the following detailed descriptions considered in conjunction with the accompanying drawings. It is to be understood, however, that the drawings are designed solely for the purposes of illustration and not as a definition of the limits of the invention.

### BRIEF DESCRIPTION OF THE DRAWINGS

- Fig. 1: shows a schematic illustration of a user controlled imaging device according to an embodiment of the invention,
- Fig. 2: shows a flow chart illustrating the steps of a method of steering a light beam of a user controlled light source of an imaging device according to an embodiment of the invention,
- Fig. 3: shows a schematic illustration of a user controlled imaging device according to a further embodiment of the invention,
- Fig. 4: shows a mobile device according to an embodiment of the invention,
- Fig. 5: shows a mobile surveillance system according to an embodiment of the invention.

In the drawings, like numbers refer to like objects throughout. Objects in the diagrams are not necessarily drawn to scale.

### DETAILED DESCRIPTION OF THE EMBODIMENTS

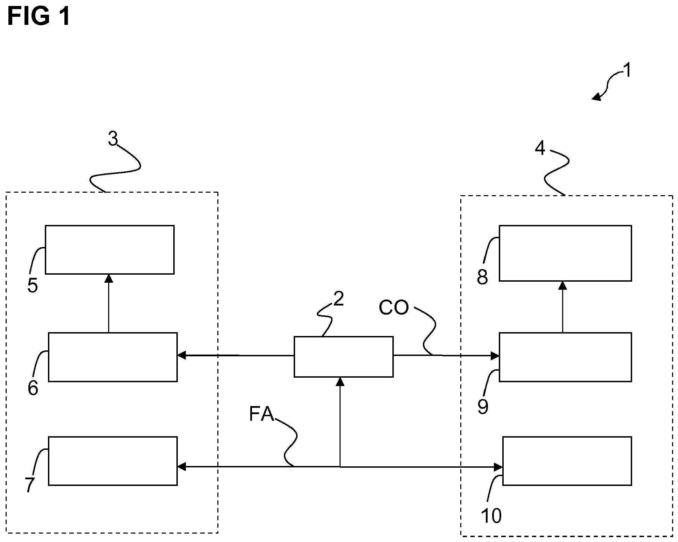

Fig 1 shows a schematic illustration of a user controlled imaging device 1 according to an embodiment of the invention. The user controlled imaging device 1, for example a smartphone, comprises a computing unit 2. The computing unit 2 is used for controlling a first module 3, which comprises an IR light source 5, a driver 6 and a front camera 7. The driver 6 of the first module 3 drives the IR light source 5. Further the computing unit 2 controls a second module 4, which comprises a visible light source 8, a driver 9 and a rear camera 10. The computing unit 2 also gets feedback from the rear camera 10 and the front camera 7. The IR light source 5 is used for enlighten the face of a user. The front camera 7, in the special embodiment of Fig 1 an IR camera, takes some images from the face of the user and transmits the face images FA to the computing unit 2. The computing unit 2 calculates a control order CO for steering the visible light module 8 of the second module 4. Based on the control order CO the visible light source 8 is directed into a direction, which has been determined based on the images FA of the front camera 7. Hence, an area of the imaged portion is enlightened, which is presently watched by the user. The watching direction of the user may be determined based on pupil detection and tracking. The control of the visible light source 8 is performed based on the input of the images FA of the face of the user, which are taken by the front camera 7.

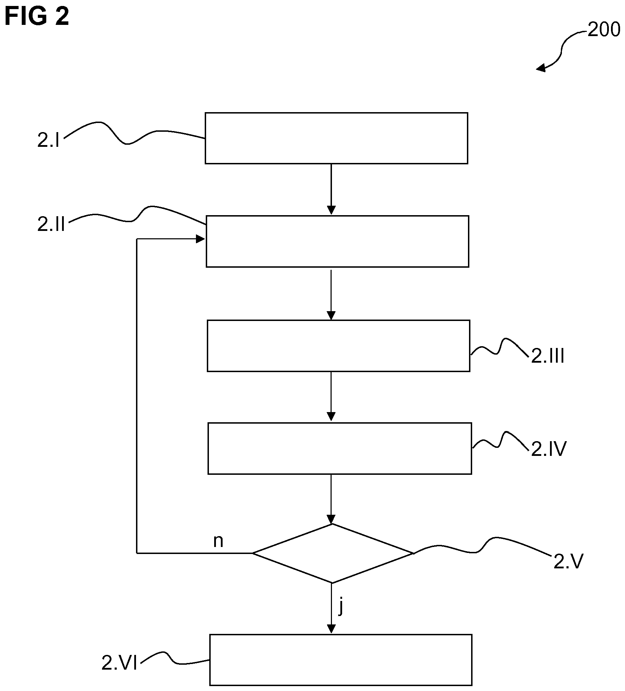

Fig 2 shows a flow chart 200 illustrating the steps of a method of steering a light beam of a user controlled light source of an imaging unit according to an embodiment of the invention. In step 2.1 the first module 3 and the second module 4 are enabled. Then at step 2.II pupil or eye tracking is started. In step 2.III the image data FA of the front camera 7 (shown in Fig 1) are transmitted to the computing unit 2 (shown in Fig 1) and are correlated with the image data of the rear camera 10 (shown in Fig 1). Particularly, the direction of view depending of the position of the eyes in the images FA of the front camera 7 is calculated. In step 2.IV the direction of the visible light beam of the visible light source 8 (shown in Fig 1) is adapted to the determined direction. Hence, the illumination in the area of high attention is increased such that contrast and signal to noise ratio of the images of the area of high attention is improved. Additionally, the illumination in an area of low attention may be decreased. In step 2.V it is determined, if the eye tracking should be stopped. In case the answer is "yes", which is symbolized by the letter "y", the surveillance process is stopped in step 2.VI. In case the answer is "no", which is symbolized by the letter "n", the method is continued with step 2.II and goes on with the pupil or eye tracking.

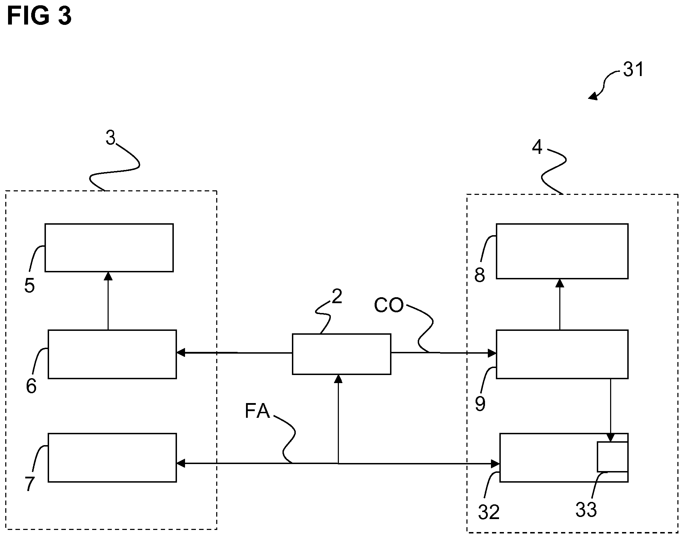

Fig 3 shows a schematic illustration of a user controlled imaging device 31 according to a second embodiment of the invention. The user controlled imaging device 31 according to a second embodiment of the invention also comprises a first module 3 and a second module 4, but differs from the user controlled imaging device 1 according to a first embodiment of the invention (shown in Fig 1) in that the computing unit 2 does not only control the visible light source 8 but also a focus 33 of the rear camera 32. That means that the focus 33 of the camera 32 is placed according to the viewing direction of the eyes of the user. Hence just the portion of the scene to be imaged, in which the user is particularly interested, is focused and is therefore recorded in more detail.

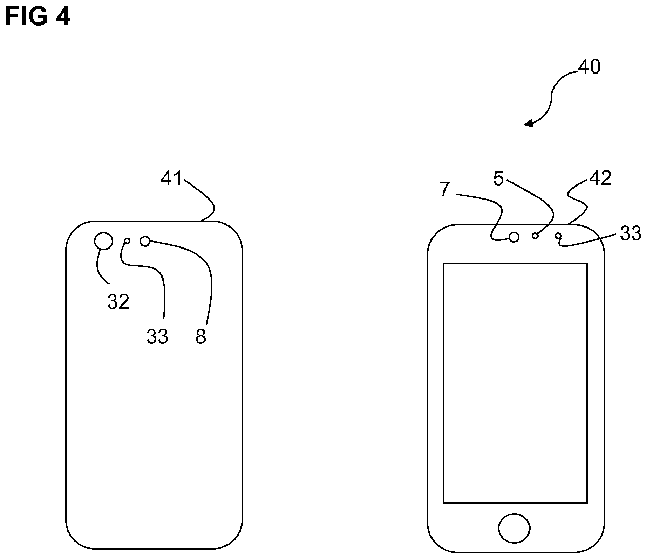

Fig 4 shows a mobile device 40 according to an embodiment of the invention. The mobile device 40, in that case a smartphone, comprises the user controlled imaging device 31 according to a second embodiment of the invention. However, only the visible parts of the user controlled imaging device 31 are depicted in Fig 4. On the left side of Fig 4 the rear side 41 of the smartphone 40 is shown. On the rear side 41 at the upper left portion a rear camera 32 is disposed. Further, right aside the camera 32 a distance meter 33 is arranged. Furthermore, at the outer right side a flash LED 8 is disposed. On the front side 42 of the smartphone 40 at an upper central position a front camera 7 is arranged. Right aside the front camera 7 an IR light source 5 is disposed as well as a distance meter unit 33. A distance meter unit is not a strict requirement to have, but existence of distance meter unit can provide distance information that can serve algorithms in order to make more accurate decisions.

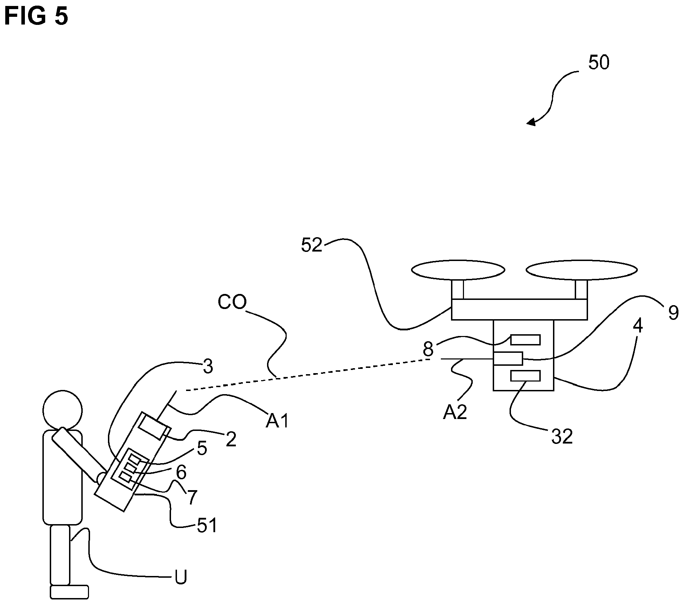

Fig 5 shows a mobile surveillance system 50 with a distributed imaging device according to an embodiment of the invention. In the embodiment shown in Fig 5, the first module 3 and the second module 4 are placed in a distance from each other. The mobile surveillance system 50 comprises a control unit 51 and a drone 52. The control unit 51 comprises the first module 3 as it is depicted in FIG 3. The first module 3 includes an IR light source 5, a driver 6 and a front camera 7. The driver 6 of the first module 3 drives the IR light source 5. Further the control unit 51 comprises a computing unit 2 for creating control orders CO for controlling a monitoring camera 32 and a flash light 8 of the drone 52. For communication, the control unit 51 includes an antenna A1. The drone 52 comprises a second module 4, which is quite similar to the second module 4 as it is depicted in Fig 3. For accepting control orders CO from the control unit 51 and for further communication the drone 52 includes an antenna A2. Based on the control orders CO from the computing unit 3 the focus of the monitoring camera 32 and the direction of the flash light 8 of the drone 50 is adapted to a view direction of a user U.

Although the present invention has been disclosed in the form of preferred embodiments and variations thereon, it will be understood that numerous additional modifications and variations could be made thereto without departing from the scope of the invention. For example, the "front side" and the "rear side" of the imaging device may be arranged apart from each other. In other words, the first module and the second module are not mandatorily placed together.

For the sake of clarity, it is to be understood that the use of "a" or "an" throughout this application does not exclude a plurality, and "comprising" does not exclude other steps or elements.

### REFERENCE SIGNS:

- 1: user controlled imaging device
- 2: computing unit
- 3: first module
- 4: second module
- 5: IR light source
- 6: driver
- 7: front camera
- 8: visible light source
- 9: driver
- 10: rear camera
- 31: user controlled imaging device
- 32: camera
- 33: focus
- 40: mobile device
- 41: rear side
- 42: front side
- 50: mobile surveillance system
- 51: control unit
- 52: drone

- A1: antenna of the control device
- A2: antenna of the drone
- CO: control order
- FA: face images

## Claims

1. User controlled imaging device (1), which comprises:
- an imaging unit (4),
- a user facing imaging unit (3),
- a pupil detection- and tracking unit (2) for computing the direction of the user's viewing direction,
- a control unit (2, 9) for controlling the imaging unit (4) corresponding to the determined direction of the user's view.

2. Imaging device according to claim 1, wherein
- the imaging unit (4) comprises a light source (8) with a steerable light beam and
- controlling the imaging unit (4) comprises orientating the light beam corresponding to the determined direction of the user's view.

3. Imaging device according to claim 1 or 2, wherein the user facing imaging unit (3) comprises a colour camera module.

4. Imaging device according to claim 1, wherein the user facing imaging unit (3) comprises an IR sensitive camera module (7).

5. Imaging device according to claim 3, wherein user facing imaging unit (3) comprises an IR light source (5).

6. Imaging device according to one of the preceding claims, wherein the user facing imaging unit (3) comprises a front camera (7) and the imaging unit (4) comprises a rear camera (10).

7. Imaging device according to claim 6, wherein controlling the imaging unit (4) comprises positioning the focus of the rear camera (10) corresponding to the determined direction of the user's view.

8. Imaging device according to one of the claims 2 to 7, wherein the light source (8) comprises a flash.

9. Mobile end device (40), comprising an imaging device (1) according to one of claims 1 to 8.

10. Method of steering an imaging unit (4)
- providing an image of the imaging unit (4),
- monitoring the face of a user (U) by an additional user facing imaging unit (3),
- performing a pupil detection based on images (FA) from the user facing imaging unit (3),
- determining a direction of user's view based on the pupil detection,
- controlling the imaging unit (4) corresponding to the determined direction.
